# EUROPEAN PATENT APPLICATION

(11) **EP 4 778 806 A1**
(43) Date of publication of application: **22.07.2026**
(21) Application number: 24899681.1
(22) Date of filing: 26.11.2024
(51) Int. Cl.: B62D 1/184

(54) **ROTATION ANGLE LIMITING MECHANISM, STEERING SYSTEM AND VEHICLE**

(30) Priority: 04.12.2023 CN 202311649378
(71) Applicant: Beijing Chehejia Automobile Technology Co., Ltd., Beijing 101300 (CN)
(72) Inventor: PAN, Yishan, Beijing 101300 (CN); LI, Xindong, Beijing 101300 (CN); ZHAO, Liang, Beijing 101300 (CN); YI, Yongliang, Beijing 101300 (CN)
(74) Representative: 2SPL Patentanwälte PartG mbB
(86) International application number: PCT/CN2024/134597
(87) International publication number: WO 2025/119041

(57) **Abstract**

The present disclosure relates to a rotation angle limiting mechanism, a steering system, and a vehicle. The rotation angle limiting mechanism includes a housing, a connecting cylinder, and a limiting assembly. A mounting cavity is disposed in the housing; the connecting cylinder is disposed in the mounting cavity and rotatable relative to the mounting cavity, and an outer wall of the connecting cylinder is provided with a connecting portion; the limiting assembly includes a fixing member and a rotating component, the fixing member is fixedly mounted in the mounting cavity and provided with a fixing portion, and the rotating component is rotatably sleeved on the connecting cylinder; the connecting cylinder has a left limit position and a right limit position; when located between the left limit position and the right limit position, the connecting cylinder is capable of driving the rotating component to rotate relative to the mounting cavity; and when the connecting cylinder is located at the left limit position or the right limit position, the connecting portion abuts the rotating component along the circumferential direction of the connecting cylinder, and the rotating component abuts the fixing portion along the circumferential direction of the connecting cylinder, to limit the rotation of the connecting cylinder relative to the mounting cavity. The rotation angle limiting mechanism of the present disclosure is simple in structure and facilitates reduction of the production cost of the rotation angle limiting mechanism.

## Description

### CROSS-REFERENCE TO RELATED APPLICATION

This application claims the priority of the Chinese Patent application filed on December 4, 2023 before the CNIPA, China National Intellectual Property Administration with the application number of 202311649378.X, and the title of "ROTATION ANGLE LIMITING MECHANISM, STEERING SYSTEM, AND VEHICLE", which is incorporated herein in its entirety by reference.

### FIELD

The present disclosure relates to the field of vehicle technologies and, in particular, to a rotation angle limiting mechanism, a steering system, and a vehicle.

### BACKGROUND

In the steering system of a vehicle, manufacturers typically incorporate a rotation angle limiting mechanism to limit the range of the rotation angle of the steering wheel. This limiting mechanism prevents the driver from continuing to turn the steering wheel further clockwise or counterclockwise once the steering wheel is rotated to a certain angle, thereby protecting the steering system of the vehicle and ensuring driving safety.

In the related art, the rotation angle limiting mechanism adopts a nut-screw type or a planetary gear assembly type. However, the structural complexity of these designs increases the production cost of the rotation angle limiting mechanism.

### SUMMARY

The present disclosure aims to at least solve one of the technical problems in the related art to some extent.

Therefore, an embodiment of the present disclosure provides a rotation angle limiting mechanism, and the rotation angle limiting mechanism is simple in structure and facilitates reduction of the production cost of the rotation angle limiting mechanism.

An embodiment of the present disclosure further provides a steering system.

An embodiment of the present disclosure further provides a vehicle.

The rotation angle limiting mechanism in the embodiment of the present disclosure includes a housing, a connecting cylinder, and a limiting assembly, a mounting cavity is disposed in the housing; the connecting cylinder is disposed in the mounting cavity and rotatable relative to the mounting cavity, and an outer wall of the connecting cylinder is provided with a connecting portion; the limiting assembly includes a fixing member and a rotating component, the fixing member is fixedly mounted in the mounting cavity and provided with a fixing portion, the rotating component is rotatably sleeved on the connecting cylinder, and the connecting cylinder has a left limit position and a right limit position; in response to the connecting cylinder being located between the left limit position and the right limit position, the connecting cylinder is capable of driving the rotating component to rotate relative to the mounting cavity; and in response to the connecting cylinder being located at the left limit position or the right limit position, the connecting portion abuts the rotating component along a circumferential direction of the connecting cylinder, and the rotating component abuts the fixing portion along the circumferential direction of the connecting cylinder, to limit rotation of the connecting cylinder relative to the mounting cavity.

According to the rotation angle limiting mechanism in the embodiment of the present disclosure, when the connecting cylinder is located at the left limit position or the right limit position, the connecting portion abuts the rotating component along the circumferential direction of the connecting cylinder, and the rotating component abuts the fixing portion along the circumferential direction of the connecting cylinder, to limit the rotation of the connecting cylinder relative to the mounting cavity, so that a rotation angle of a steering wheel may be limited. When the connecting cylinder moves between the left limit position and the right limit position, the rotating component is sleeved on the connecting cylinder and rotatable relative to the connecting cylinder, and the rotating component is also capable of rotating relative to the fixing member, to achieve step-by-step transmission of the rotation angle limiting mechanism. Therefore, a transmission structure of the rotation angle limiting mechanism in the embodiment of the present disclosure is simple in structure and facilitates reduction of the production cost of the rotation angle limiting mechanism.

In some embodiments, the rotating component includes a rotating sleeve; the rotating sleeve is provided with an internal limiting portion and an external limiting portion; in response to the connecting cylinder being located between the left limit position and the right limit position, the connecting portion is rotatable relative to the internal limiting portion along the circumferential direction of the connecting cylinder, and the external limiting portion is rotatable relative to the fixing portion along a circumferential direction of the rotating sleeve; and in response to the connecting cylinder being located at the left limit position or the right limit position, the connecting portion abuts the internal limiting portion along the circumferential direction of the connecting cylinder and the external limiting portion abuts the fixing portion along the circumferential direction of the rotating sleeve.

In some embodiments, a plurality of rotating sleeves are disposed; the plurality of rotating sleeves are arranged in sequence along an axial direction of the connecting cylinder; in response to the connecting cylinder being located between the left limit position and the right limit position, for two adjacent rotating sleeves among the plurality of rotating sleeves, an external limiting portion of one rotating sleeve is rotatable relative to an internal limiting portion of the other rotating sleeve; and in response to the connecting cylinder being located at the left limit position or the right limit position, the external limiting portion of the one rotating sleeve abuts the internal limiting portion of the other rotating sleeve.

In some embodiments, the rotating component includes a first rotating sleeve and a second rotating sleeve, the connecting portion and an internal limiting portion of the first rotating sleeve are arranged along the circumferential direction of the connecting cylinder, the second rotating sleeve is sleeved on the first rotating sleeve, an external limiting portion of the first rotating sleeve and an internal limiting portion of the second rotating sleeve are arranged along the circumferential direction of the connecting cylinder, the fixing member is sleeved on the second rotating sleeve, and an external limiting portion of the second rotating sleeve and the fixing portion are arranged along the circumferential direction of the connecting cylinder.

In some embodiments, the rotating component includes a first rotating sleeve, a second rotating sleeve, and a third rotating sleeve, the connecting portion and an internal limiting portion of the first rotating sleeve are arranged along the circumferential direction of the connecting cylinder, the second rotating sleeve is sleeved on the first rotating sleeve, an external limiting portion of the first rotating sleeve and an internal limiting portion of the second rotating sleeve are arranged along the circumferential direction of the connecting cylinder, the third rotating sleeve is sleeved on the second rotating sleeve, an external limiting portion of the second rotating sleeve and an internal limiting portion of the third rotating sleeve are arranged along the circumferential direction of the connecting cylinder, the fixing member is sleeved on the third rotating sleeve, and an external limiting portion of the third rotating sleeve and the fixing portion are arranged along the circumferential direction of the connecting cylinder.

In some embodiments, the internal limiting portion and the external limiting portion of a same rotating sleeve are arranged along an axial direction of the same rotating sleeve.

In some embodiments, the rotating sleeve has a first section and a second section coaxially connected, a stepped hole is provided in the first section, the internal limiting portion is disposed on an inner wall of the stepped hole, the external limiting portion is disposed on an outer wall of the second section, and an outer wall surface of the external limiting portion is flush with an outer wall surface of the first section.

In some embodiments, one end of the stepped hole adjacent to the second section has a supporting stepped surface; the connecting cylinder is provided with an annular flange; the connecting portion is disposed on an outer wall of the annular flange; the annular flange is mounted in the stepped hole and abuts against a corresponding supporting stepped surface; and for two adjacent rotating sleeves among the plurality of rotating sleeves, a second section of one rotating sleeve is mounted in a stepped hole of the other rotating sleeve and abuts against the corresponding supporting stepped surface.

In some embodiments, the limiting assembly further includes a cushioning member; each of an end surface of the annular flange facing the fixing member and an end surface of the second section facing the fixing member is provided with a mounting surface; and the cushioning member is disposed between the mounting surface and the corresponding supporting stepped surface.

In some embodiments, one of the mounting surface and the cushioning member is provided with a clamping slot, the other is provided with a clamping protrusion, and the clamping protrusion is engaged with the clamping slot.

In some embodiments, each of the connecting portion and the external limiting portion is provided with at least two abutting surfaces that are oppositely disposed along the circumferential direction of the connecting cylinder, and part of cushioning members are disposed on the at least two abutting surfaces; and/or part of the cushioning members are disposed on an outer wall surface of the connecting portion and the outer wall surface of the external limiting portion.

The steering system in another embodiment of the present disclosure includes a reduction mechanism, the rotation angle limiting mechanism in the embodiment of the present disclosure, and a steering mechanism, the reduction mechanism is provided with an output shaft and an input shaft; the input shaft is connected to the connecting cylinder; and the steering mechanism includes a steering wheel and a steering shaft, one end of the steering shaft is connected to the steering wheel, and the other end of the steering shaft is connected to the output shaft.

According to the steering system in the embodiment of the present disclosure, when the connecting cylinder is located at the left limit position or the right limit position, the connecting portion abuts the rotating component along the circumferential direction of the connecting cylinder, and the rotating component abuts the fixing portion along the circumferential direction of the connecting cylinder, to limit the rotation of the connecting cylinder relative to the mounting cavity. Therefore, the rotation angle of the steering wheel may be limited. When the connecting cylinder moves between the left limit position and the right limit position, the rotating component is sleeved on the connecting cylinder and rotatable relative to the connecting cylinder, and the rotating component is also capable of rotating relative to the fixing member, to achieve step-by-step transmission of the rotation angle limiting mechanism. Therefore, the transmission structure of the rotation angle limiting mechanism of the steering system in the embodiment of the present disclosure is simple in structure and facilitates reduction of the production cost of the rotation angle limiting mechanism.

The vehicle in another embodiment of the present disclosure includes the steering system of the embodiment of the present disclosure.

According to the vehicle in the embodiment of the present disclosure, when the connecting cylinder is located at the left limit position or the right limit position, the connecting portion abuts the rotating component along the circumferential direction of the connecting cylinder, and the rotating component abuts the fixing portion along the circumferential direction of the connecting cylinder, to limit the rotation of the connecting cylinder relative to the mounting cavity. Therefore, the rotation angle of the steering wheel may be limited. When the connecting cylinder moves between the left limit position and the right limit position, the rotating component is sleeved on the connecting cylinder and rotatable relative to the connecting cylinder, and the rotating component is also capable of rotating relative to the fixing member, to achieve step-by-step transmission of the rotation angle limiting mechanism. Therefore, the transmission structure of the rotation angle limiting mechanism of the vehicle in the embodiment of the present disclosure is simple in structure and facilitates reduction of the production cost of the rotation angle limiting mechanism.

### BRIEF DESCRIPTION OF THE DRAWINGS

FIG. 1 is a schematic diagram of a steering system according to an embodiment of the present disclosure;
FIG. 2 is a partial sectional view of a rotation angle limiting mechanism and a reduction mechanism along an F-F section cutting line in FIG. 1 according to an embodiment of the present disclosure;
FIG. 3 is an exploded view of a rotation angle limiting mechanism and a reduction mechanism according to an embodiment of the present disclosure;
FIG. 4 is a schematic diagram of a rotation angle limiting mechanism (with a housing excluded) according to an embodiment of the present disclosure;
FIG. 5 is a schematic diagram of a connecting cylinder of a rotation angle limiting mechanism according to an embodiment of the present disclosure;
FIG. 6 is a schematic diagram of the installation of a connecting cylinder and a cushioning member of a rotation angle limiting mechanism according to an embodiment of the present disclosure;
FIG. 7 is a schematic diagram of a rotating sleeve of a rotation angle limiting mechanism according to an embodiment of the present disclosure;
FIG. 8 is a schematic diagram of the installation of a rotating sleeve and a cushioning member of a rotation angle limiting mechanism according to an embodiment of the present disclosure;
FIG. 9 is a schematic diagram of a cushioning member of a rotation angle limiting mechanism according to an embodiment of the present disclosure;
FIG. 10 is a schematic diagram of a fixing member of a rotation angle limiting mechanism according to an embodiment of the present disclosure;
FIG. 11 is a schematic diagram of a housing of a rotation angle limiting mechanism according to an embodiment of the present disclosure;
FIG. 12 is a schematic diagram of a bearing of a rotation angle limiting mechanism according to an embodiment of the present disclosure;
FIG. 13 is an exploded view of a rotation angle limiting mechanism (with a housing excluded) between a left limit position and a right limit position according to an embodiment of the present disclosure;
FIG. 14 is an exploded view of a rotation angle limiting mechanism (with a housing excluded) at a right limit position according to an embodiment of the present disclosure; and
FIG. 15 is an exploded view of a rotation angle limiting mechanism (with a housing excluded) at a left limit position according to an embodiment of the present disclosure; and

### Reference numerals,

100: rotation angle limiting mechanism;
101: housing; 1011: mounting cavity;
102: connecting cylinder; 1021: connecting portion; 10211: abutting surface; 1022: annular flange; 10221: mounting surface; 10222: clamping slot; 11222: positioning clamping slot; 12222: aligning clamping slot; 10223: ring slot; 10224: mounting hole;
103: limiting assembly; 1031: fixing member; 10311: fixing portion; 1032: rotating component; 10321: rotating sleeve; 11321: first rotating sleeve; 12321: second rotating sleeve; 13321: third rotating sleeve; 103211: internal limiting portion; 103212: external limiting portion; 103213: first section; 103214: second section; 103215: stepped hole; 103216: supporting stepped surface; 1033: cushioning member; 10331: clamping protrusion; 11331: positioning clamping protrusion; 12331: aligning clamping protrusion; 10332: cushioning portion; 1034: bearing; 1035: bolt;
200: reduction mechanism; 201: reduction case; 202: input shaft;
300: steering mechanism; and 301: steering shaft.

### DETAILED DESCRIPTION

The embodiments of the present disclosure are described in detail below, and examples of the embodiments are illustrated in the drawings. The embodiments described below with reference to the drawings are exemplary only for explaining the present disclosure and not to be construed as limitations to the present disclosure.

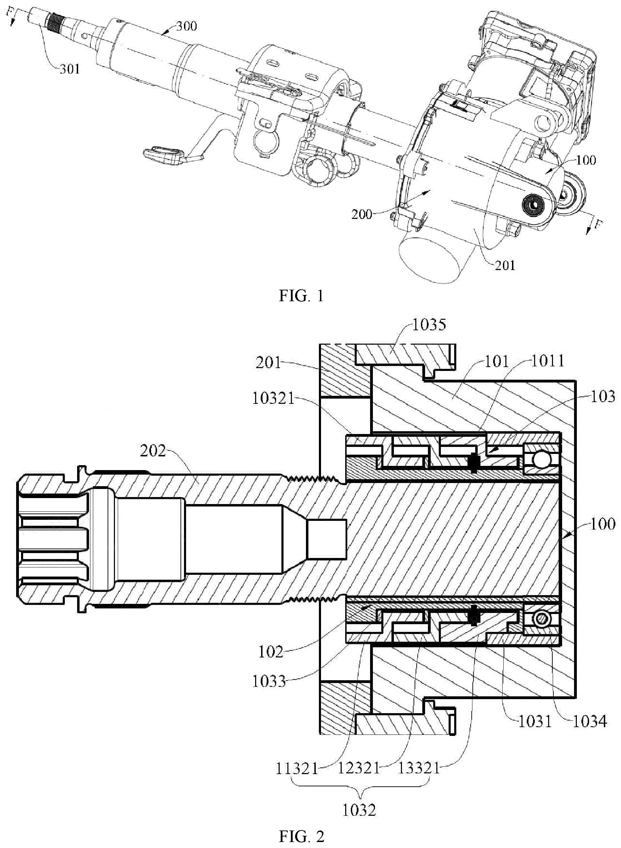

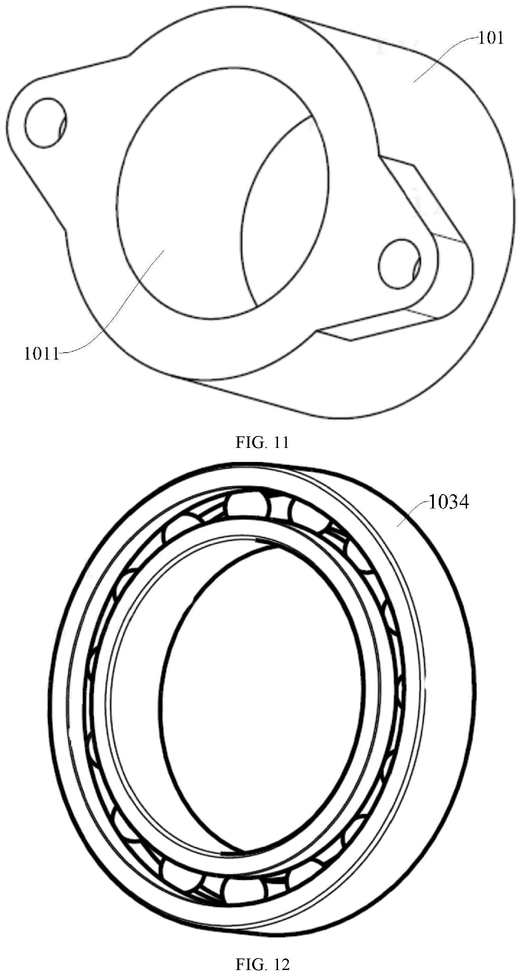

A rotation angle limiting mechanism 100, a steering system, and a vehicle in the embodiments of the present disclosure are described below with reference to FIG. 1 to FIG. 15.

The rotation angle limiting mechanism 100 in an embodiment of the present disclosure includes a housing 101, a connecting cylinder 102, and a limiting assembly 103. A mounting cavity 1011 is disposed in the housing 101; the connecting cylinder 102 is disposed in the mounting cavity 1011 and rotatable relative to the mounting cavity 1011, and an outer wall of the connecting cylinder 102 is provided with a connecting portion 1021; the limiting assembly 103 includes a fixing member 1031 and a rotating component 1032, the fixing member 1031 is fixedly mounted in the mounting cavity 1011 and provided with a fixing portion 10311, and the rotating component 1032 is rotatably sleeved on the connecting cylinder 102; and the connecting cylinder 102 has a left limit position and a right limit position.

When located between the left limit position and the right limit position, the connecting cylinder 102 may drive the rotating component 1032 to rotate relative to the mounting cavity 1011; and when the connecting cylinder is located at the left limit position or the right limit position, the connecting portion 1021 abuts the rotating component 1032 along the circumferential direction of the connecting cylinder 102, and the rotating component 1032 abuts the fixing portion 10311 along the circumferential direction of the connecting cylinder 102, to limit the rotation of the connecting cylinder 102 relative to the mounting cavity 1011.

It may be understood that the left limit position may correspond to a limit position of counterclockwise rotation of a steering wheel, and the right limit position may correspond to a limit position of clockwise rotation of the steering wheel, thereby limiting a rotation angle of the steering wheel.

According to the rotation angle limiting mechanism 100 in the embodiment of the present disclosure, when the connecting cylinder 102 is located at the left limit position or the right limit position, the connecting portion 1021 abuts the rotating component 1032 along the circumferential direction of the connecting cylinder 102, and the rotating component 1032 abuts the fixing portion 10311 along the circumferential direction of the connecting cylinder 102, to limit the rotation of the connecting cylinder 102 relative to the mounting cavity 1011. Therefore, the rotation angle of the steering wheel may be limited. When the connecting cylinder 102 moves between the left limit position and the right limit position, the rotating component 1032 is sleeved on the connecting cylinder 102 and rotatable relative to the connecting cylinder 102, and the rotating component 1032 is also capable of rotating relative to the fixing member 1031, to achieve step-by-step transmission of the rotation angle limiting mechanism 100. Therefore, a transmission structure of the rotation angle limiting mechanism 100 in the embodiment of the present disclosure is simple in structure and facilitates reduction of the production cost of the rotation angle limiting mechanism 100.

It should be noted that as shown in FIG. 2 to FIG. 6, a mounting hole 10224 is provided in the connecting cylinder 102, and an input shaft 202 of a reduction mechanism 200 is inserted in the mounting hole 10224 in a non-rotating manner. In other words, the input shaft 202 is inserted in the mounting hole 10224 but cannot rotate relative to the mounting hole 10224, that is, the input shaft 202, when rotating, is capable of driving the connecting cylinder 102 to synchronously rotate.

The input shaft 202 of the reduction mechanism 200 drives the connecting cylinder 102 to rotate, and the connecting cylinder 102 drives the rotating component 1032 to rotate, so that the input shaft 202 is allowed to rotate within a certain range, until the connecting portion 1021 abuts the rotating component 1032 and the rotating component 1032 abuts the fixing portion 10311. For example, the input shaft 202 is matched with the mounting hole 10224 through a spline structure, thereby facilitating assembly and disassembly of the connecting cylinder 102 and the input shaft 202.

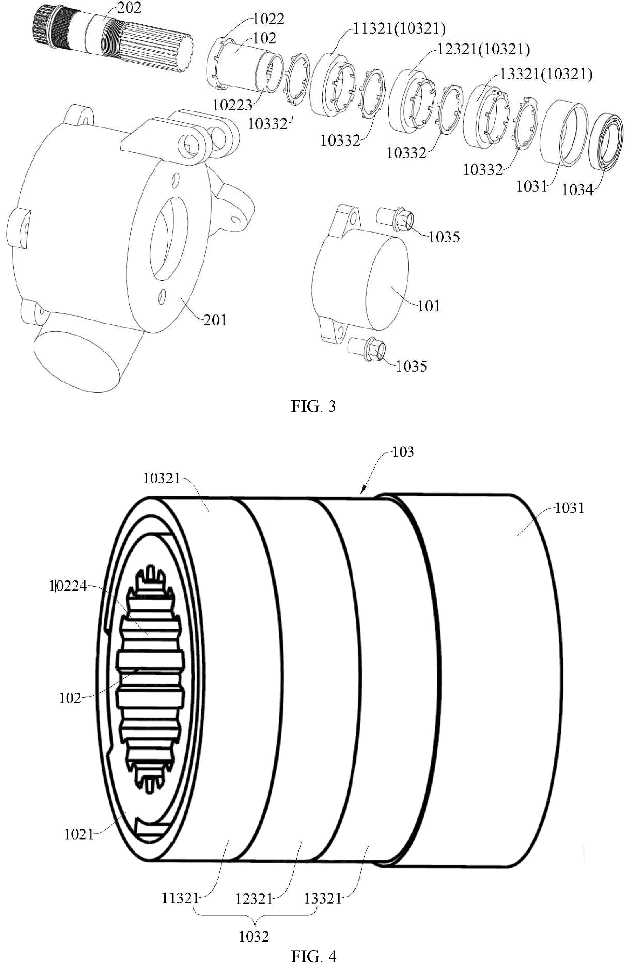

In an example, as shown in FIG. 2 and FIG. 3, the reduction mechanism 200 includes a reduction case 201, and the housing 101 is fixedly connected to the reduction case 201. For example, the housing 101 and the reduction case 201 may be connected through a bolt 1035. Therefore, when the input shaft 202 drives the connecting cylinder 102 to rotate, the housing 101 may remain fixed. An axis of the mounting cavity 1011, an axis of the connecting cylinder 102, and an axis of the rotating component 1032 are positioned in a same line, thereby ensuring the rotating stability of the connecting cylinder 102 and the rotating component 1032.

Optionally, as shown in FIG. 2 to FIG. 8, the rotating component 1032 includes a rotating sleeve 10321, and one or more rotating sleeves 10321 may be disposed. It may be understood that the rotation angle limiting mechanism 100 in the embodiment of the present disclosure may change a range of a rotation angle of the connecting cylinder 102 by changing a number of rotating sleeves 10321 (or a circumferential length of 1021).

In an example, one rotating sleeve 10321 may be disposed. The rotating sleeve 10321 is provided with an internal limiting portion 103211 and an external limiting portion 103212; when the connecting cylinder is located between the left limit position and the right limit position, the connecting portion 1021 is rotatable relative to the internal limiting portion 103211 along the circumferential direction of the connecting cylinder 102, and the external limiting portion 103212 is rotatable relative to the fixing portion 10311 along the circumferential direction of the rotating sleeve 10321; and when the connecting cylinder is located at the left limit position or the right limit position, the connecting portion 1021 abuts the internal limiting portion 103211 along the circumferential direction of the connecting cylinder 102, and the external limiting portion 103212 abuts the fixing portion 10311 along the circumferential direction of the rotating sleeve 10321. It may be understood that when the connecting cylinder 102 is located between the left limit position and the right limit position, the connecting portion 1021 and the internal limiting portion 103211 are spaced apart along the circumferential direction of the connecting cylinder 102, so that the connecting cylinder 102 rotates circumferentially relative to the rotating sleeve 10321; and the external limiting portion 103212 and the fixing portion 10311 are spaced apart along the circumferential direction of the connecting cylinder 102, so that the rotating sleeve 10321 rotates circumferentially relative to the fixing member 1031. The rotating sleeve 10321 is sleeved on the connecting cylinder 102 and rotatable relative to the connecting cylinder 102. Therefore, the rotation angle limiting mechanism 100 is conveniently assembled, and has the advantages of simple structure and low manufacturing cost.

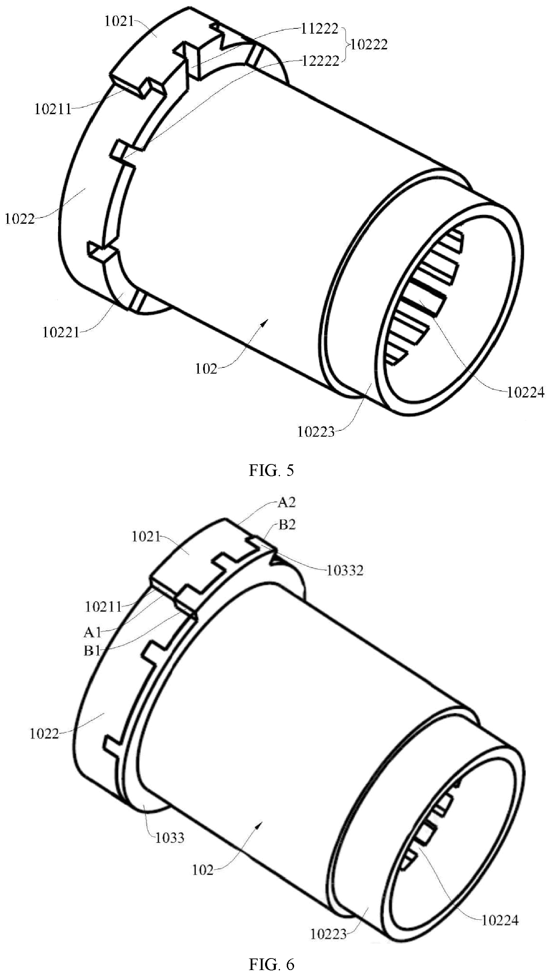

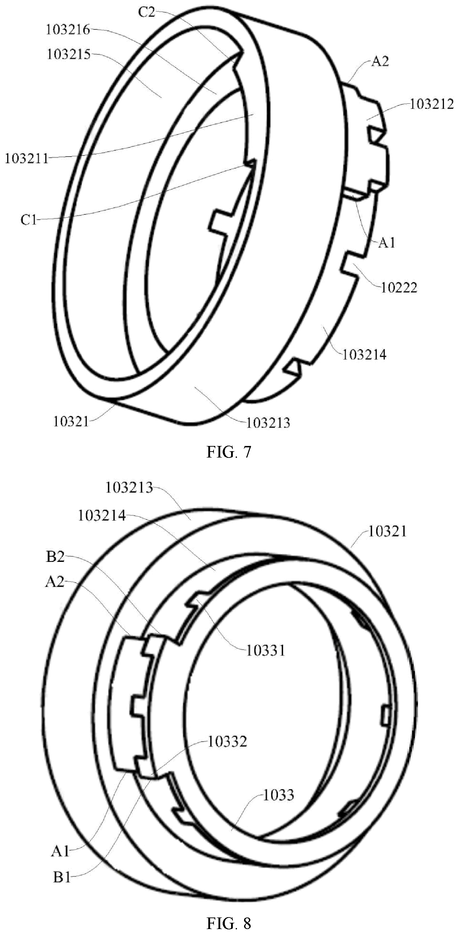

Specifically, as shown in FIG. 6 and FIG. 7, the connecting portion 1021 is provided with a surface A1 and a surface A2 disposed oppositely along the circumferential direction of the connecting cylinder 102, and the internal limiting portion 103211 is provided with a surface C1 and a surface C2 disposed oppositely along the circumferential direction of the connecting cylinder 102. When the connecting cylinder is at the right limit position, the surface A1 of the connecting portion 1021 abuts the surface C2 of the internal limiting portion 103211, and when the connecting cylinder is at the left limit position, the surface A2 of the connecting portion 1021 abuts the surface C1 of the internal limiting portion 103211. Similarly, the external limiting portion 103212 is provided with a surface A1 and a surface A2 disposed oppositely along the circumferential direction of the connecting cylinder 102, and the fixing portion 10311 is provided with a surface C1 and a surface C2 disposed oppositely along the circumferential direction of the connecting cylinder 102. When the connecting cylinder is at the right limit position, the surface A1 of the external limiting portion 103212 abuts the surface C2 of the fixing portion 10311, and when the connecting cylinder is at the left limit position, the surface A2 of the external limiting portion 103212 abuts the surface C1 of the fixing portion 10311.

Optionally, as shown in FIG. 7 and FIG. 8, for the same rotating sleeve 10321, the internal limiting portion 103211 and the external limiting portion 103212 of the rotating sleeve 10321 are arranged along the axial direction of the rotating sleeve 10321. Therefore, radial dimensions of the rotation angle limiting mechanism 100 may be reduced. For example, the internal limiting portion 103211 and the external limiting portion 103212 extend along the axial direction of the rotating sleeve 10321, the surface C1 of the internal limiting portion 103211 and the surface A1 of the external limiting portion 103212 are coplanar, and the surface C2 of the internal limiting portion 103211 and the surface A2 of the external limiting portion 103212 are coplanar, thereby facilitating manufacturing of the rotating sleeve 10321. In addition, when a plurality of rotating sleeves 10321 are disposed, the plurality of rotating sleeves 10321 may be interchangeably mounted, thereby achieving good universality.

In some other embodiments, as shown in FIG. 2 to FIG. 8, a plurality of rotating sleeves 10321 are disposed, and the plurality of rotating sleeves 10321 are arranged in sequence along the axial direction of the connecting cylinder 102. When the connecting cylinder is located between the left limit position and the right limit position, for two adjacent rotating sleeves 10321, the external limiting portion 103212 of one rotating sleeve 10321 is rotatable relative to the internal limiting portion 103211 of the other rotating sleeve 10321; and when the connecting cylinder is at the left limit position or the right limit position, the external limiting portion 103212 of one rotating sleeve 10321 abuts the internal limiting portion 103211 of the other rotating sleeve 10321. It may be understood that when the connecting cylinder 102 rotates between the left limit position and the right limit position, the connecting cylinder 102 drives the rotating sleeve 10321 at the head end to rotate, and adjacent rotating sleeves 10321 transmit power step by step in sequence and finally drive the rotating sleeve 10321 at the tail end to rotate relative to the fixing portion 10311. Therefore, the rotation angle limiting mechanism 100 in the embodiment of the present disclosure may change the range of the rotation angle of the connecting cylinder 102 by changing a number of rotating sleeves 10321 or circumferential dimensions of the internal limiting portion 103211 and the external limiting portion 103212.

For another example, two rotating sleeves 10321 are disposed, namely, the rotating component 1032 includes a first rotating sleeve 11321 and a second rotating sleeve 12321; the connecting portion 1021 and the internal limiting portion 103211 of the first rotating sleeve 11321 are arranged along the circumferential direction of the connecting cylinder 102; the second rotating sleeve 12321 is sleeved on the first rotating sleeve 11321; the external limiting portion 103212 of the first rotating sleeve 11321 and the internal limiting portion 103211 of the second rotating sleeve 12321 are arranged along the circumferential direction of the connecting cylinder 102; the fixing member 1031 is sleeved on the second rotating sleeve 12321; and the external limiting portion 103212 of the second rotating sleeve 12321 and the fixing portion 10311 are arranged along the circumferential direction of the connecting cylinder 102. It may be understood that the first rotating sleeve 11321 and the second rotating sleeve 12321 have the same structure and may be interchangeably reused. Therefore, the production cost of the rotation angle limiting mechanism 100 may be reduced, and the rotation angle limiting mechanism is simple in structure and convenient to assemble and disassemble.

It may be understood that for two adjacent rotating sleeves 10321, when the connecting cylinder is at the right limit position, the surface A1 of the external limiting portion 103212 of one rotating sleeve 10321 (the first rotating sleeve 11321) abuts the surface C2 of the internal limiting portion 103211 of the other rotating sleeve 10321 (the second rotating sleeve 12321); and when the connecting cylinder is at the left limit position, the surface A2 of the external limiting portion 103212 of one rotating sleeve 10321 (the first rotating sleeve 11321) abuts the surface C1 of the internal limiting portion 103211 of the other rotating sleeve 10321 (the second rotating sleeve 12321), thereby limiting rotation ranges of the two adjacent rotating sleeves 10321.

For another example, as shown in FIG. 2 to FIG. 8, three rotating sleeves 10321 are disposed, namely, the rotating component 1032 includes a first rotating sleeve 11321, a second rotating sleeve 12321, and a third rotating sleeve 13321; the connecting portion 1021 and the internal limiting portion 103211 of the first rotating sleeve 11321 are arranged along the circumferential direction of the connecting cylinder 102; the second rotating sleeve 12321 is sleeved on the first rotating sleeve 11321; the external limiting portion 103212 of the first rotating sleeve 11321 and the internal limiting portion 103211 of the second rotating sleeve 12321 are arranged along the circumferential direction of the connecting cylinder 102; the third rotating sleeve 13321 is sleeved on the second rotating sleeve 12321; the external limiting portion 103212 of the second rotating sleeve 12321 and the internal limiting portion 103211 of the third rotating sleeve 13321 are arranged along the circumferential direction of the connecting cylinder 102; the fixing member 1031 is sleeved on the third rotating sleeve 13321; and the external limiting portion 103212 of the third rotating sleeve 13321 and the fixing portion 10311 are arranged along the circumferential direction of the connecting cylinder 102. It may be understood that the first rotating sleeve 11321, the second rotating sleeve 12321, and the third rotating sleeve 13321 have the same structure and may be interchangeably mounted (reused). Therefore, the production cost of the rotation angle limiting mechanism 100 may be reduced, and the rotation angle limiting mechanism is simple in structure and convenient to assemble and disassemble.

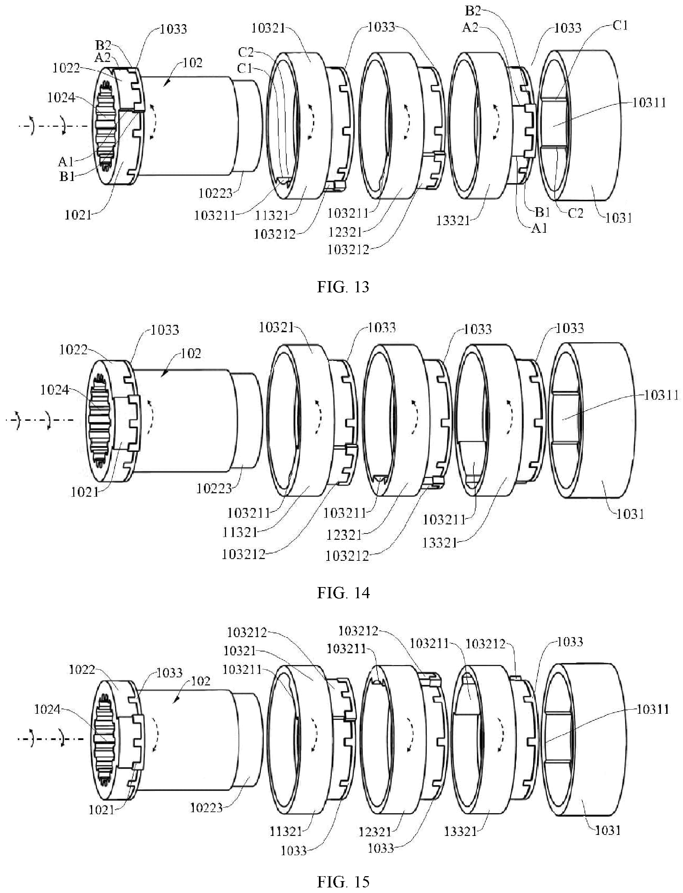

As shown in FIG. 13 to FIG. 15, a solution in which the rotation angle limiting mechanism 100 has three rotating sleeves 10321 is described as an example below.

When the connecting cylinder 102 is located between the left limit position and the right limit position, the connecting portion 1021 of the connecting cylinder 102 and the internal limiting portion 103211 of the first rotating sleeve 11321 are spaced apart along the circumferential direction of the connecting cylinder 102, the external limiting portion 103212 of the first rotating sleeve 11321 and the internal limiting portion 103211 of the second rotating sleeve 12321 are spaced apart along the circumferential direction of the connecting cylinder 102, the external limiting portion 103212 of the second rotating sleeve 12321 and the internal limiting portion 103211 of the third rotating sleeve 13321 are spaced apart along the circumferential direction of the connecting cylinder 102, and the external limiting portion 103212 of the third rotating sleeve 13321 and the fixing portion 10311 are spaced apart along the circumferential direction of the connecting cylinder 102.

When the connecting cylinder 102 is located at the right limit position (i.e. when the steering wheel rotates clockwise to the limit position), the surface A1 of the connecting portion 1021 abuts the surface C2 of the internal limiting portion 103211 of the first rotating sleeve 11321, the surface A1 of the external limiting portion 103212 of the first rotating sleeve 11321 abuts the surface C2 of the internal limiting portion 103211 of the second rotating sleeve 12321, the surface A1 of the external limiting portion 103212 of the second rotating sleeve 12321 abuts the surface C2 of the internal limiting portion 103211 of the third rotating sleeve 13321, and the surface A1 of the external limiting portion 103212 of the third rotating sleeve 13321 abuts the surface C2 of the fixing portion 10311 of the fixing member 1031. At this moment, the connecting cylinder 102 and all rotating sleeves 10321 stop rotating, that is, the connecting cylinder 102 is located at the right limit position.

When the connecting cylinder 102 is located at the left limit position (i.e. When the steering wheel rotates counterclockwise to the limit position), the surface A2 of the connecting portion 1021 abuts the surface C1 of the internal limiting portion 103211 of the first rotating sleeve 11321, the surface A2 of the external limiting portion 103212 of the first rotating sleeve 11321 abuts the surface C1 of the internal limiting portion 103211 of the second rotating sleeve 12321, the surface A2 of the external limiting portion 103212 of the second rotating sleeve 12321 abuts the surface C1 of the internal limiting portion 103211 of the third rotating sleeve 13321, and the surface A2 of the external limiting portion 103212 of the third rotating sleeve 13321 abuts the surface C1 of the fixing portion 10311 of the fixing member 1031. At this moment, the connecting cylinder 102 and all rotating sleeves 10321 stop rotating, that is, the connecting cylinder 102 is located at the left limit position.

In some embodiments, as shown in FIG. 7 and FIG. 8, the rotating sleeve 10321 has a first section 103213 and a second section 103214 which are connected coaxially, a stepped hole 103215 is provided in the first section 103213, the internal limiting portion 103211 is disposed on an inner wall of the stepped hole 103215, the external limiting portion 103212 is disposed on an outer wall of the second section 103214, and an outer wall surface of the external limiting portion 103212 is flush with an outer wall surface of the first section 103213. Therefore, when the plurality of rotating sleeves 10321 are nested together, the rotating component 1032 may substantially have a cylindrical structure, so that radial dimensions of the rotating component 1032 may be reduced, and the rotation angle limiting mechanism 100 has a more compact structure and occupies a smaller space.

Optionally, as shown in FIG. 6 and FIG. 7, one end of the stepped hole 103215 adjacent to the second section 103214 has a supporting stepped surface 103216; the connecting cylinder 102 is provided with an annular flange 1022; the connecting portion 1021 is disposed on an outer wall of the annular flange 1022; the annular flange 1022 is mounted in the stepped hole 103215 and abuts against the corresponding supporting stepped surface 103216; and for two adjacent rotating sleeves 10321, the second section 103214 of one rotating sleeve 10321 is mounted in the stepped hole 103215 of the other rotating sleeve 10321 and abuts against the corresponding supporting stepped surface 103216.

A solution in which the rotation angle limiting mechanism 100 has three rotating sleeves 10321 is taken as an example. The first section 103213 of the first rotating sleeve 11321 is sleeved on the annular flange 1022, and an axial end surface of the annular flange 1022 abuts against the supporting stepped surface 103216 of the first rotating sleeve 11321; the first section 103213 of the second rotating sleeve 12321 is sleeved on the second section 103214 of the first rotating sleeve 11321, and the second section 103214 of the first rotating sleeve 11321 abuts against the supporting stepped surface 103216 of the second rotating sleeve 12321; the first section 103213 of the third rotating sleeve 13321 is sleeved on the second section 103214 of the second rotating sleeve 12321, and the second section 103214 of the second rotating sleeve 12321 abuts against the supporting stepped surface 103216 of the third rotating sleeve 13321; and the fixing member 1031 is sleeved on the second section 103214 of the third rotating sleeve 13321, and the second section 103214 of the third rotating sleeve 13321 abuts against an end surface of the fixing member 1031 or the housing 101. Therefore, the first rotating sleeve 11321, the second rotating sleeve 12321, and the third rotating sleeve 13321 may be limited axially and prevented from swaying along the axial direction of the connecting cylinder 102.

In some embodiments, as shown in FIG. 2, FIG. 6, and FIG. 8, the limiting assembly 103 further includes cushioning members 1033, each of an end surface of the annular flange 1022 facing the fixing member 1031 and an end surface of the second section 103214 facing the fixing member 1031 is provided with a mounting surface 10221, and the cushioning members 1033 are disposed between the mounting surfaces 10221 and the corresponding supporting stepped surfaces 103216. It may be understood that a plurality of cushioning members 1033 are disposed, part of the cushioning members 1033 are disposed between the annular flange 1022 and the corresponding supporting stepped surface 103216, and the other cushioning members 1033 are disposed between the second section 103214 and the corresponding supporting step surface 103216. Therefore, impact force and noise generated during rotation of parts in the rotation angle limiting mechanism 100 may be reduced, wear of the parts may be slowed down, and the service life of the rotation angle limiting mechanism 100 may be prolonged.

As shown in FIG. 5, the cushioning member 1033 may be mounted on the mounting surface 10221 in an engaging manner, and may also be formed on the mounting surface 10221 in an integral plastic covering manner. The forming manner of the cushioning member 1033 is not specifically limited herein. It should be noted that the cushioning member 1033 is made of a soft material and deforms when compressed by external force. For example, the cushioning member 1033 may be made of plastic or rubber.

Optionally, as shown in FIG. 6 to FIG. 9, each of the connecting portion 1021 and the external limiting portion 103212 is provided with two abutting surfaces 10211 that are oppositely disposed (i.e. surface A1 and surface A2) along the circumferential direction of the connecting cylinder 102, part of the cushioning members 1033 are disposed on the abutting surfaces 10211, and part of the cushioning members 1033 are disposed on an outer wall surface of the connecting portion 1021 and an outer wall surface of the external limiting portion 103212.

The cushioning member 1033 disposed on the annular flange 1022 is taken as an example. The cushioning member 1033 is provided with cushioning portions 10332, and the cushioning portions 10332 are disposed on two opposite sides of the connecting portion 1021 along the circumferential direction of the connecting cylinder 102. When the surface A1 of the connecting portion 1021 is about to abut the surface C2 of the internal limiting portion 103211 of the first rotating sleeve 11321, a surface B1 of the cushioning portion 10332 will be in contact with the surface C2 of the internal limiting portion 103211 of the first rotating sleeve 11321 first. When the surface A2 of the connecting portion 1021 is about to abut the surface C1 of the internal limiting portion 103211 of the first rotating sleeve 11321, a surface B2 of the cushioning portion 10332 will be in contact with the surface C1 of the internal limiting portion 103211 of the first rotating sleeve 11321 first. Therefore, noise generated by collision between the connecting portion 1021 and the internal limiting portion 103211 of the first rotating sleeve 11321 may be reduced. Similarly, the cushioning member 1033 between two adjacent rotating sleeves 10321 may reduce noise generated by collision between the internal limiting portion 103211 and the external limiting portion 103212 during rotation of the two adjacent rotating sleeves 10321.

In an example, as shown in FIG. 5 to FIG. 9, one of the mounting surface 10221 and the cushioning member 1033 is provided with a clamping slot 10222, the other is provided with a clamping protrusion 10331, and the clamping protrusion 10331 is engaged with the clamping slot 10222. For example, the clamping protrusion 10331 is disposed on the cushioning member 1033, and the clamping slot 10222 is disposed on the mounting surface 10221. A plurality of clamping protrusions 10331 may be disposed, and the plurality of clamping protrusions 10331 are arranged at intervals along the circumferential direction of the cushioning member 1033. A plurality of clamping slots 10222 are disposed, and the plurality of clamping slots 10222 one-to-one correspond to the plurality of clamping protrusions 10331.

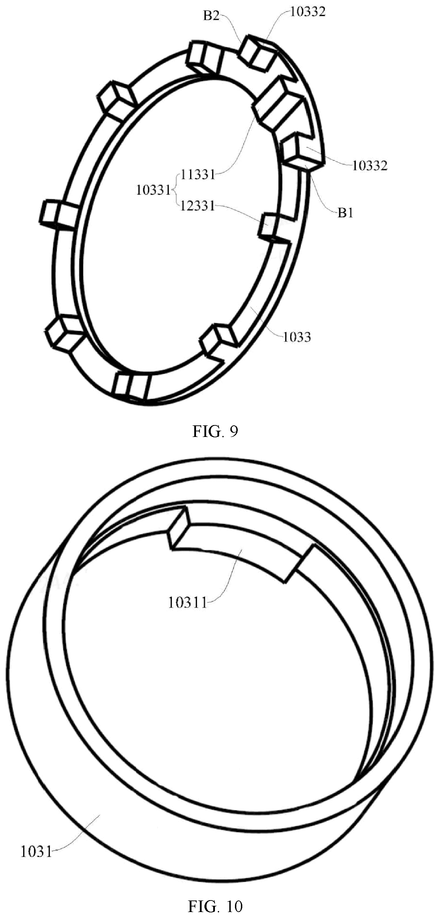

Specifically, as shown in FIG. 6 and FIG. 9, the clamping protrusion 10331 includes a positioning clamping protrusion 11331 and an aligning clamping protrusion 12331, and the positioning clamping protrusion 11331 and the aligning clamping protrusion 12331 are arranged at intervals along the circumferential direction of the cushioning member 1033. The clamping slot 10222 includes a positioning clamping slot 11222 and an aligning clamping slot 12222, the positioning clamping slot 11222 corresponds to the positioning clamping protrusion 11331, and the aligning clamping slot 12222 corresponds to the aligning clamping protrusion 12331. By taking the connecting cylinder 102 as an example, the clamping slot 10222 includes a positioning clamping slot 11222 and a plurality of aligning clamping slots 12222, and the clamping protrusion 10331 includes a positioning clamping protrusion 11331 and a plurality of aligning clamping protrusions 12331. The positioning clamping slot 11222 is disposed at the connecting portion 1021, and the radial depth of the positioning clamping slot 11222 is greater than that of the aligning clamping slot 12222. Accordingly, the positioning clamping protrusion 11331 is disposed between two cushioning portions 10332, and the radial dimension of the positioning clamping protrusion 11331 is greater than that of the aligning clamping protrusion 12331. Therefore, the assembly of the cushioning members 1033 may be designed with a poka-yoke feature, to reduce the probability of incorrect assembly by operators. Moreover, according to the rotation angle limiting mechanism in the embodiment of the present disclosure, the clamping protrusion 10331 and the clamping slot 10222 adopt the above-mentioned design, to facilitate enhancing the mounting reliability and positioning precision of the cushioning members 1033.

In some embodiments, as shown in FIG. 2, FIG. 5, and FIG. 6, a ring slot 10223 is provided on an outer wall of one end, adjacent to the fixing member 1031, of the connecting cylinder 102, the rotation angle limiting mechanism 100 further includes a bearing 1034, an inner ring of the bearing 1034 is engaged with the ring slot 10223, the fixing member 1031 has a shaft sleeve structure, and an outer ring of the bearing 1034 is engaged with an inner wall of the fixing member 1031, so that the bearing may support the connecting cylinder 102 to rotate relative to the housing 101. An outer wall of the fixing member 1031 and an inner wall of the mounting cavity 1011 are connected through a spline structure, and may also be connected in an interference fit manner, thereby limiting the rotation of the fixing member 1031 relative to the mounting cavity 1011.

As shown in FIG. 1, a steering system according to another embodiment of the present disclosure includes a reduction mechanism 200, the rotation angle limiting mechanism 100 in the embodiment of the present disclosure, and a steering mechanism 300, the reduction mechanism 200 is provided with an output shaft (not shown) and an input shaft 202; the input shaft 202 is connected to the connecting cylinder 102 through a spline structure; and the steering mechanism 300 includes a steering wheel (not shown) and a steering shaft 301, one end of the steering shaft 301 is connected to the steering wheel, and the other end of the steering shaft 301 is connected to the output shaft.

According to the steering system in the embodiment of the present disclosure, when the connecting cylinder 102 is located at the left limit position or the right limit position, the connecting portion 1021 abuts the rotating component 1032 along the circumferential direction of the connecting cylinder 102, and the rotating component 1032 abuts the fixing portion 10311 along the circumferential direction of the connecting cylinder 102, to limit the rotation of the connecting cylinder 102 relative to the mounting cavity 1011. Therefore, the rotation angle of the steering wheel may be limited. When the connecting cylinder 102 moves between the left limit position and the right limit position, the rotating component 1032 is sleeved on the connecting cylinder 102 and rotatable relative to the connecting cylinder 102, and the rotating component 1032 may also rotate relative to the fixing member 1031, to achieve step-by-step transmission of the rotation angle limiting mechanism 100. Therefore, the transmission structure of the rotation angle limiting mechanism 100 of the steering system in the embodiment of the present disclosure is simple in structure and facilitates reduction of the production cost of the rotation angle limiting mechanism 100.

A vehicle according to another embodiment of the present disclosure includes the steering system of the present disclosure. Technical advantages of the vehicle in the embodiment of the present disclosure are the same as those of the steering system in the above-mentioned embodiment, which are not repeated herein.

In the description of the present disclosure, it should be understood that orientations or positional relationships indicated by terms "center", "longitudinal direction", "transverse direction", "length", "width", "thickness", "upper", "lower", "front", "back", "left", "right", "vertical", "horizontal", "top", "bottom", "inside", "outside", "clockwise", "counterclockwise", "axial direction", "radial direction", "circumferential direction" and the like are based on the orientations or positional relationships shown in the drawings, only for facilitating description of the present disclosure and simplifying the description, rather than indicating or implying that the devices or elements must have specific orientations or must be constructed and operated in specific orientations, and thus may not be interpreted as limitations to the present disclosure.

In addition, terms "first" and "second" are only for description, and cannot be construed as indication or implication of relative importance or implicit indication of a number of indicated technical features. Therefore, features defined as "first" and "second" may explicitly or implicitly include at least one such feature. In the description of the present disclosure, "a plurality of" means at least two, such as two or three, unless otherwise specifically and explicitly defined.

In the present disclosure, unless otherwise clearly specified and defined, terms such as "mounted", "connected", "connection", and "fixed" should be understood in a generalized manner. For example, connection may be a fixed connection, a detachable connection, or integration, may be a mechanical connection, may also be an electrical connection or communication, and may be a direct connection, an indirect connection via a medium, an internal communication of two elements, or an interaction relationship between two elements. Those of ordinary skill in the art may understand the specific meanings of the foregoing terms in the present disclosure according to specific situations.

In the present disclosure, unless otherwise explicitly specified and defined, a first feature being "on" or "below" a second feature may mean that the first and second features are in direct contact, or that the first and second features are in indirect contact via a medium. Moreover, the first feature being "over", "above", or "on top of" the second feature may mean that the first feature is directly above or diagonally above the second feature, or it simply means that the first feature has a higher horizontal level than the second feature. The first feature being "under", "below", or "on bottom of" the second feature may mean that the first feature is directly under or diagonally under the second feature, or it simply means that the first feature has a lower horizontal level than the second feature.

In the present disclosure, terms "one embodiment", "some embodiments", "examples", "specific examples", and the like indicate that the specific features, structures, materials, or characteristics described in connection with the embodiment or example are included in at least one embodiment or example of the present disclosure. In the specification, schematic references to the aforementioned terms are not necessarily directed to the same embodiment or example. In addition, the specific features, structures, materials, or characteristics described may be combined in a proper manner in any one or a plurality of embodiments or examples. Furthermore, those skilled in the art may combine different embodiments or examples described in the specification, as well as the features of different embodiments or examples, provided that they are not contradictory to each other.

Although the above embodiments have been shown and described, it may be understood that these embodiments are illustrative and are not to be construed as limitations to the present disclosure, and that changes, modifications, substitutions, and variations made to the above embodiments by those of ordinary skill in the art fall within the scope of protection of the present disclosure.

## Claims

1. A rotation angle limiting mechanism, **characterized by** comprising:
a housing, wherein a mounting cavity is disposed in the housing;
a connecting cylinder, wherein the connecting cylinder is disposed in the mounting cavity and rotatable relative to the mounting cavity, and an outer wall of the connecting cylinder is provided with a connecting portion; and
a limiting assembly, wherein the limiting assembly comprises a fixing member and a rotating component, the fixing member is fixedly mounted in the mounting cavity and provided with a fixing portion, the rotating component is rotatably sleeved on the connecting cylinder, and the connecting cylinder has a left limit position and a right limit position;
in response to the connecting cylinder being located between the left limit position and the right limit position, the connecting cylinder is capable of driving the rotating component to rotate relative to the mounting cavity; and in response to the connecting cylinder being located at the left limit position or the right limit position, the connecting portion abuts the rotating component along a circumferential direction of the connecting cylinder, and the rotating component abuts the fixing portion along the circumferential direction of the connecting cylinder, to limit rotation of the connecting cylinder relative to the mounting cavity.

2. The rotation angle limiting mechanism according to claim 1, **characterized in that** the rotating component comprises a rotating sleeve; the rotating sleeve is provided with an internal limiting portion and an external limiting portion; in response to the connecting cylinder being located between the left limit position and the right limit position, the connecting portion is rotatable relative to the internal limiting portion along the circumferential direction of the connecting cylinder, and the external limiting portion is rotatable relative to the fixing portion along a circumferential direction of the rotating sleeve; and in response to the connecting cylinder being located at the left limit position or the right limit position, the connecting portion abuts the internal limiting portion along the circumferential direction of the connecting cylinder and the external limiting portion abuts the fixing portion along the circumferential direction of the rotating sleeve.

3. The rotation angle limiting mechanism according to claim 2, **characterized in that** a plurality of rotating sleeves are disposed; the plurality of rotating sleeves are arranged in sequence along an axial direction of the connecting cylinder; in response to the connecting cylinder being located between the left limit position and the right limit position, for two adjacent rotating sleeves among the plurality of rotating sleeves, an external limiting portion of one rotating sleeve is rotatable relative to an internal limiting portion of the other rotating sleeve; and in response to the connecting cylinder being located at the left limit position or the right limit position, the external limiting portion of the one rotating sleeve abuts the internal limiting portion of the other rotating sleeve.

4. The rotation angle limiting mechanism according to claim 3, **characterized in that** the rotating component comprises a first rotating sleeve and a second rotating sleeve, the connecting portion and an internal limiting portion of the first rotating sleeve are arranged along the circumferential direction of the connecting cylinder, the second rotating sleeve is sleeved on the first rotating sleeve, an external limiting portion of the first rotating sleeve and an internal limiting portion of the second rotating sleeve are arranged along the circumferential direction of the connecting cylinder, the fixing member is sleeved on the second rotating sleeve, and an external limiting portion of the second rotating sleeve and the fixing portion are arranged along the circumferential direction of the connecting cylinder.

5. The rotation angle limiting mechanism according to claim 3, **characterized in that** the rotating component comprises a first rotating sleeve, a second rotating sleeve, and a third rotating sleeve, the connecting portion and an internal limiting portion of the first rotating sleeve are arranged along the circumferential direction of the connecting cylinder, the second rotating sleeve is sleeved on the first rotating sleeve, an external limiting portion of the first rotating sleeve and an internal limiting portion of the second rotating sleeve are arranged along the circumferential direction of the connecting cylinder, the third rotating sleeve is sleeved on the second rotating sleeve, an external limiting portion of the second rotating sleeve and an internal limiting portion of the third rotating sleeve are arranged along the circumferential direction of the connecting cylinder, the fixing member is sleeved on the third rotating sleeve, and an external limiting portion of the third rotating sleeve and the fixing portion are arranged along the circumferential direction of the connecting cylinder.

6. The rotation angle limiting mechanism according to claim 3, **characterized in that** the internal limiting portion and the external limiting portion of a same rotating sleeve are arranged along an axial direction of the same rotating sleeve.

7. The rotation angle limiting mechanism according to claim 3, **characterized in that** the rotating sleeve has a first section and a second section coaxially connected, a stepped hole is provided in the first section, the internal limiting portion is disposed on an inner wall of the stepped hole, the external limiting portion is disposed on an outer wall of the second section, and an outer wall surface of the external limiting portion is flush with an outer wall surface of the first section.

8. The rotation angle limiting mechanism according to claim 7, **characterized in that** one end of the stepped hole adjacent to the second section has a supporting stepped surface; the connecting cylinder is provided with an annular flange; the connecting portion is disposed on an outer wall of the annular flange; the annular flange is mounted in the stepped hole and abuts against a corresponding supporting stepped surface; and for two adjacent rotating sleeves among the plurality of rotating sleeves, a second section of one rotating sleeve is mounted in a stepped hole of the other rotating sleeve and abuts against the corresponding supporting stepped surface.

9. The rotation angle limiting mechanism according to claim 8, **characterized in that** the limiting assembly further comprises a cushioning member; each of an end surface of the annular flange facing the fixing member and an end surface of the second section facing the fixing member is provided with a mounting surface; and the cushioning member is disposed between the mounting surface and the corresponding supporting stepped surface.

10. The rotation angle limiting mechanism according to claim 9, **characterized in that** one of the mounting surface and the cushioning member is provided with a clamping slot, the other is provided with a clamping protrusion, and the clamping protrusion is engaged with the clamping slot.

11. The rotation angle limiting mechanism according to claim 9, **characterized in that** each of the connecting portion and the external limiting portion is provided with at least two abutting surfaces that are oppositely disposed along the circumferential direction of the connecting cylinder, and part of cushioning members are disposed on the at least two abutting surfaces;
and/or part of the cushioning members are disposed on an outer wall surface of the connecting portion and the outer wall surface of the external limiting portion.

12. A steering system, **characterized by** comprising:
a reduction mechanism, wherein the reduction mechanism is provided with an output shaft and an input shaft;
the rotation angle limiting mechanism according to any one of claims 1 to 11, wherein the input shaft is connected to the connecting cylinder; and
a steering mechanism, wherein the steering mechanism comprises a steering wheel and a steering shaft, one end of the steering shaft is connected to the steering wheel, and the other end of the steering shaft is connected to the output shaft.

13. A vehicle, **characterized by** comprising the steering system according to claim 12.
